**Europäisches Patentamt**

**European Patent Office**

**Office européen des brevets**

(11) Veröffentlichungsnummer: **0 213 408**
**B1**

(12) **EUROPÄISCHE PATENTSCHRIFT**

(45) Veröffentlichungstag der Patentschrift:
**31.01.90**

(51) Int. Cl.⁴: **H04M 3/36,** H04Q 11/04,
H04Q 3/545

(21) Anmeldenummer: **86110621.9**

(22) Anmeldetag: **31.07.86**

(54) **Schaltungsanordnung für Fernmeldevermittlungsanlagen, insbesondere Fernsprechvermittlungsanlagen, mit informationsverarbeitenden Schaltwerken und Verkehrsmesseinrichtungen.**

(30) Priorität: **14.08.85 DE 3529168**

(43) Veröffentlichungstag der Anmeldung:
**11.03.87 Patentblatt 87/11**

(45) Bekanntmachung des Hinweises auf die Patenterteilung:
**31.01.90 Patentblatt 90/5**

(84) Benannte Vertragsstaaten:
**AT BE CH DE FR GB IT LI NL SE**

(56) Entgegenhaltungen:
**EP-A- 0 104 637**
**EP-A- 0 121 239**
**EP-A- 0 166 101**
**US-A- 3 517 123**
**US-A- 4 497 979**

**PATENTS ABSTRACTS OF JAPAN, Band 5,**
**Nr. 163 (E-78)[835], 20. Oktober 1981; & JP - A - 56 90 692**

(73) Patentinhaber: **Siemens Aktiengesellschaft,
Wittelsbacherplatz 2, D-8000 München 2(DE)**

(72) Erfinder: **Eder, Michael, Dipl.-Ing., Strohreit 2,
D-8091 Soyen(DE)**
Erfinder: **Leutner, Klaus, Dipl.-Ing., Goerdelestrasse 2,
D-8025 Unterhaching(DE)**
Erfinder: **Pohl, Siegfried, Dr. rer. nat. Ing. grad.,
Hirschplanallee 7, D-8042 Oberschleissheim(DE)**

## Beschreibung

Die Erfindung betrifft eine Schaltungsanordnung für Fernmeldevermittlungsanlagen, insbesondere Fernsprechvermittlungsanlagen, mit zentralen und/oder teilzentralen informationsverarbeitenden Schaltwerken mit einer hinsichtlich der Informations-Verarbeitungskapazität begrenzten Leistungsfähigkeit, und mit Verkehrsmeßeinrichtungen zur Ermittlung der Informationsverarbeitungs-Verkehrsbelastung jeweils eines Schaltwerkes und zur Erkennung von durch Verarbeitungsanforderungen verursachten Informationsverarbeitungs-Verkehrsüberlastungen und mit einer Abwehr solcher Überlastungen dienenden Anforderungsabweiseinrichtungen, in denen nach Maßgabe der jeweils ermittelten Informationsverarbeitungs-Verkehrsbelastung ein kritischer Grenzwert einregelbar ist, und in denen unterschiedlichen Dringlichkeitsgraden verschiedener Arten von Verarbeitungsanforderungen entsprechend diesen analog unterschiedliche Dringlichkeitswerte individuell zugeordnet sind, und die durch jeweils einen Vergleich des Dringlichkeitswertes einer jeden Verarbeitungsanforderung mit dem kritischen Grenzwert jener jeweils ein Annahmekennzeichen - bzw. Abweisungskennzeichen - zuteilt, wenn der Dringlichkeitswert größer - bzw. kleiner - als der kritische Grenzwert ist, und durch die eine jede der Verarbeitungsanforderungen für eingetroffene Informationen gemäß dem betreffenden zugeteilten Kennzeichen dem Schaltwerk zur Verarbeitung zugeführt wird - bzw. nicht zugeführt wird -, wo durch überdurchschnittlich dringliche Verarbeitungsanforderungen mit einem gewissen Vorrang gegenüber unterdurchschnittlich dringlichen Verarbeitungsanforderungen hinsichtlich ihrer Verarbeitung in dem Schaltwerk berücksichtigt werden.

Eine Schaltungsanordnung dieser Art beschreibt die deutsche Offenlegungsschrift 3 416 074. Diese Schaltungsanordnung ermöglicht es, bei einer Abweisungsmaßnahmen erforderlich machenden stärkeren Verkehrsbelastung des zentralen Schaltwerkes durch Verarbeitungsanforderungen diese nach ihrem jeweiligen Dringlichkeitsgrad zu behandeln, das heißt einige von ihnen noch anzunehmen, die übrigen aber abzuweisen. Den Dringlichkeitsgraden der verbindungsindividuellen Schalteinrichtungen sind Dringlichkeitswerte zugeordnet, die jeweils der bei einer Belegung einer verbindungsindividuellen Schalteinrichtung von dieser an das betreffende informationsverarbeitende Schaltwerk abgegebenen Verarbeitungsanforderung beigegeben werden. Je nach dem kritischen Grenzwert, der in der Anforderungsabweicheinrichtung eingeregelt ist, wird nach Maßgabe dieses Grenzwertes durch jeweils einen Vergleich des betreffenden Dringlichkeitswertes mit dem Grenzwert die betreffende Verarbeitungsanforderung noch angenommen oder abgewiesen.

Die verbindungsindividuellen Schalteinrichtungen können Teilnehmeranschlußschaltungen und Verbindungssätze sein. Letztere können gegenüber den Teilnehmeranschlußschaltungen priorisiert sein. Das würde bedeuten, daß bei einem bestimmten Grad der Verkehrsbelastung Verarbeitungsanforderungen, die von Verbindungssätzen kommen, noch angenommen werden, dagegen aber keine Verarbeitungsanforderungen, die von Teilnehmeranschlußschaltungen her kommen. Die verbindungsindividuellen Schalteinrichtungen können sich auch in mehr als zwei Klassen unterscheiden, und eben so können die ihnen zugeordneten Dringlichkeitsgrade entsprechend der beschriebenen Weise mehrfach gestuft sein. Für die verbindungsindividuellen Schalteinrichtungen eines untersten Dringlichkeitsgrades (oder mehrerer unterster Dringlichkeitsgrade) bedeutet dies, daß auch bei erhöhter Verkehrsbelastung und entsprechend intensiveren Abweisungsmaßnahmen den davon betroffenen Teilnehmern eine bestimmte Chance für eine Verbindungsherstellung verbleibt, insbesondere im Hinblick auf die Notrufmöglichkeit.

Für die Erfindung besteht nun die Aufgabe, eine Schaltungsanordnung der eingangs angegebenen Art, insbesondere die unter anderem darin angegebenen Abweiseinrichtungen, dazu mit auszunutzen, bei erhöhter Verkehrsbelastung und entsprechend erforderlichen intensiveren Abweisungsmaßnahmen den davon betroffenen Teilnehmern die erwähnte MindestChance zur Verbindungsherstellung so zu gewährleisten, daß diese Chance gleichmäßig für alle von den Abweisungsmaßnahmen betroffenen Teilnehmern besteht und so gestaltet ist, daß sie so weit wie möglich unabhängig gemacht ist von der Häufigkeit von Belegungsversuchen durch die einzelnen Teilnehmer. Ein in besonders kurzen Zeitabständen vorgenommenes Wiederholen von Belegungsversuchen durch einen Teilnehmer soll diesem also möglichst keine oder möglichst eine nur geringfügig größere Chance für einen erfolgreichen Verbindungsherstellungsversuch geben. Ein "Drängeln" soll also nicht belohnt werden und eine Beeinflussung des Teilnehmerverhaltens in dieser Richtung soll vermieden werden.

Die Erfindung löst die gestellte Aufgabe dadurch, daß die o.g. Schaltungsanordnung Mittel aufweist, die bewirken, daß in größerer Anzahl vorgesehene Schalteinrichtungen, von denen die Verarbeitungsanforderungen mit gleichem Dringlichkeitsgrad abgegeben werden, und denen mittels ihrer Adressen gleiche Dringlichkeitswerte zugeordnet sind, bei Abgabe jeweils einer Verarbeitungsanforderung zusätzlich durch einen ebenfalls aus der Adresse abgeleiteten Ordnungswert ergänzend markiert werden, daß die den Verarbeitungsanforderungen zugeordneten Dringlichkeitswerte durch die sie ergänzenden Ordnungswerte variiert sind, wodurch Verbindungsanforderungen mit ursprünglich gleicher Dringlichkeit in Dringlichkeitsgruppen mit pro Dringlichkeitswert unterschiedlichen Dringlichkeitsklassifizierungen verschiedenen Wertes aufgeteilt sind, daß die Abweiseinrichtungen bei dem Vergleich mit ihrem kritischen Grenzwert die jeweilige Dringlichkeitsklassifizierung verwenden, und daß die Zuordnung der mehreren Dringlichkeitsklassifizierungen pro Dringlichkeitswert zu den Ordnungswerten in gleichmäßigen Zeitabständen zyklisch vertauscht wird.

Durch die Erfindung sind also die von Abweisungsmaßnahmen betroffenen Verbindungsanforderungen und damit die sie abgebenden Teilnehmer in mehrere Gruppen zusammengefaßt, denen Dringlichkeitsklassifizierungen in zeitlich gleichmäßigem Rhythmus zyklisch abwechselnd so zugeordnet sind, daß diese Gruppen durch ihre laufend wechselnden Dringlichkeitsklassifizierungen reihum wechselnd gegenseitig priorisiert sind. So kann zum Beispiel in einer Phase eine dieser Gruppen gegenüber allen übrigen dieser Gruppen priorisiert sein, in einer nächsten Phase eine weitere dieser Gruppen, und so fort in zyklischem und zeitlich gleichmäßigem weiterschreitendem Wechsel.

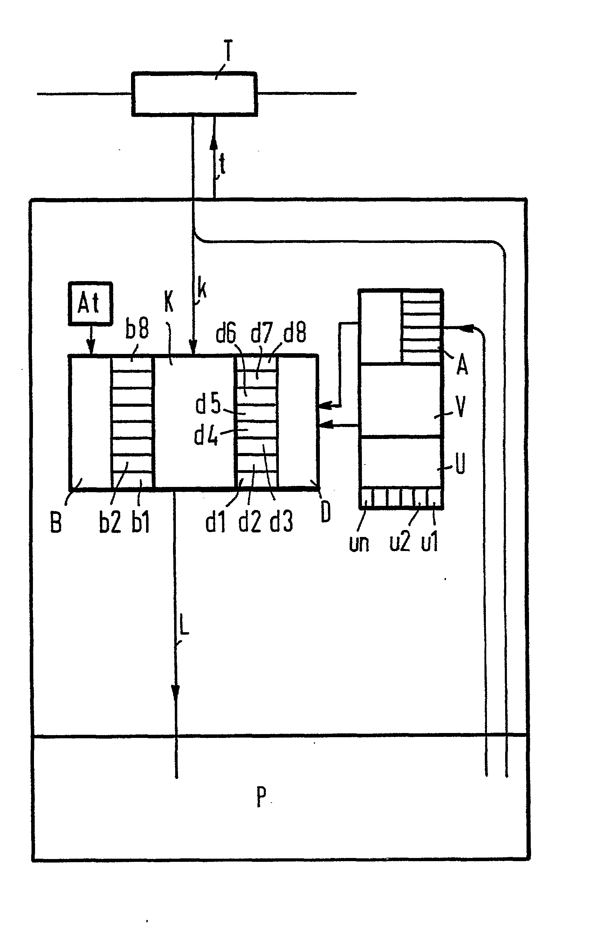

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist.

Das Ausführungsbeispiel zeigt auszugsweise eine Schaltungsanordnung der Fernsprechvermittlungstechnik, die in ihren vielfältigen Realisierungsmöglichkeiten als bekannt vorausgesetzt wird. Im vorliegenden Falle möge es sich um eine zentralgesteuerte Fernsprechvermittlungsanlage handeln, bei der die gesamten Steuerungsvorgänge, zum Beispiel Verbindungsherstellungsvorgänge, zentral oder teilzentral gesteuert werden. Deren Abwicklung möge ein zentrales oder teilzentrales informationsverarbeitendes Schaltwerk P dienen. Naturgemäß hat es eine hinsichtlich der Informations-Verarbeitungskapazität begrenzte Leistungsfähigkeit.

Im oberen Teil der Zeichnung ist eine verbindungsindividuelle Schalteinrichtung T dargestellt. Tatsächlich sind verbindungsindividuelle Schalteinrichtungen in großer Anzahl vorhanden. Bei diesen verbindungsindividuellen Schalteinrichtungen kann es sich um Teilnehmeranschlußschaltungen, Wahlempfangssätze, Verbindungssätze, Leitungsabschlußschaltungen von Orts- und Fernverbindungsleitungen und dergleichen handeln. Im Falle der Ausbildung der Fernsprechvermittlungsanlage in PCM-Technik möge es sich bei den genannten verbindungsindividuellen Schalteinrichtungen T um Ports in den Anschlußgruppen handeln. Detaillierte Zusammenhänge hierüber sind in der Beschreibung des Digitalvermittlungssystems EWSD im Beiheft der Zeitschrift "telcom report" von 1981 beschrieben, sowie in der US-Patentschrift 4 564 725.

In den verbindungsindividuellen Schalteinrichtungen T treffen Informationen ein, die zu verarbeiten sind. Hierbei handelt es sich um sämtliche Schaltkennzeichen, die von Teilnehmerstellen aus abgegeben werden, von denen aus Teilnehmer Verbindungen herzustellen beabsichtigen. Entsprechendes gilt für verbindungsindividuelle Schalteinrichtungen, die nicht teilnehmerindividuell sind, zum Beispiel Verbindungssätze, Leitungsabschlußschaltungen und dergleichen. In der genannten Offenlegungsschrift sind darüber hinaus bereits detailliert Einzelheiten über die Aufgabe der Verarbeitung von eintreffenden Informationen beschrieben.

Sämtliche in den verbindungsindividuellen Schalteinrichtungen T eintreffenden Informationen sind durch das Schaltwerk P, das - wie bereits angedeutet - auch mehrfach vorgesehen sein kann, zu verarbeiten. Diese Informationen werden in an sich bekannter Weise mit Hilfe von Scan-Vorgängen laufend abgefragt und durch das Schaltwerk P von den verbindungsindividuellen Schalteinrichtungen T abgerufen.

Wegen der Begrenztheit der Leistungsfähigkeit des Schaltwerkes P wird mit an sich bekannten Verkehrsmeßeinrichtungen laufend die Informationsverarbeitungs-Verkehrsbelastung des Schaltwerkes P gemessen. Hierbei handelt es sich also um die Belastung des Schaltwerkes P mit Aufträgen zur Verarbeitung von in den verbindungsindividuellen Schalteinrichtungen T eintreffenden Informationen. Ein zentrales Schaltwerk P kann außerdem mit Informationsverarbeitungs-Aufträgen belastet werden, die anderen Ursprungs sind, zum Beispiel für Routineprüfungen innerhalb des Schaltwerks selbst, und dergleichen.

Die genannten und hier als bereits bekannt vorausgesetzten Verkehrsmeßeinrichtungen dienen also zur Ermittlung der Informationsverarbeitungs-Verkehrsbelastung des Schaltwerkes P. Dies dient zur Erkennung von durch Verarbeitungsanforderungen verursachten Informationsverarbeitungs-Verkehrsüberlastungen. Jede zu verarbeitende, in einer verbindungsindividuellen Schalteinrichtung T getroffene Information hat eine Verarbeitungsanforderung zur Folge, die sich an das Schaltwerk P richtet. Verursacht die Menge der insgesamt eintreffenden, zu verarbeitenden Informationen eine InformationsverarbeitungsVerkehrsüberlastung beim Schaltwerk P, so werden Maßnahmen zur Abwehr solcher Überlastungen eingeleitet. Hierzu sind Anforderungsabweiseinrichtungen vorgesehen, die dafür sorgen, daß ein Zuviel an eintreffenden, zu verarbeitenden Informationen abgewiesen wird. Entsprechende im Aufbau befindliche Verbindungen werden demgemäß nicht vervollständigt; der betreffende wählende Teilnehmer erhält in an sich bekannter Weise ein Besetztsignal.

Die Anforderungsabweiseinrichtungen brauchen natürlich ihre Wirkung nur zu entfalten, wenn die Informationsverarbeitungs-Verkehrsbelastung des Schaltwerkes P zu groß wird. Je nach der erreichten Informationsverarbeitungs-Verkehrsbelastung des Schaltwerkes P muß eine Anforderungsabweiseinrichtung mehr oder weniger der insgesamt eintreffenden Informationsverarbeitungs-Anforderungen abweisen. Der Grad der Belastung bzw. Überlastung des Schaltwerkes P ist maßgebend für einen Prozentsatz von abzuweisenden Verarbeitungsanforderungen. Hierzu ist in einer Anforderungsabweiseinrichtung nach Maßgabe der jeweils ermittelten Informationsverarbeitungs-Verkehrsbelastung ein kritischer Grenzwert einregelbar. Dieser gibt an, welcher Anteil der insgesamt sich an das Schaltwerk P richtenden Verarbeitungsanforderungen abzuweisen ist.

Wie bereits in der genannten Offenlegungsschrift beschrieben ist, wird bei der Abweisung von Verarbeitungsanforderungen die Dringlichkeit der verschiedenen Verarbeitungsanforderungen berücksichtigt. Zweckmäßig ist es zum Beispiel bei der Verbindungsherstellung, Informationsverarbeitungsvorgänge für Verbindungsherstellungsvorgänge nach Maßgabe des jeweils bereits erzielten Fortschritts der jeweiligen Verbindungsherstellung zu bevorzugen und Abweisungen - soweit erforderlich - demgemäß vorzugsweise bei Verarbeitungsanforderungen vorzunehmen, die Informationsverarbeitungsvorgänge von Verbindungen betreffen, die bezüglich der Verbindungsherstellung erst am Anfang sind. Zweckmäßig kann es zum Beispiel auch sein, Verbindungsherstellungsvorgänge für abgehende Verbindungen gegenüber Verbindungsherstellungsvorgängen für ankommende Verbindungen zu bevorzugen. Dementsprechend können Verarbeitungsanforderungen der verschiedenen Arten mit entsprechend unterschiedlichen Dringlichkeitsgraden ausgestattet sein. Demgemäß sind diesen verschieden dringlichen Verarbeitungsanforderungen unterschiedliche Dringlichkeitswerte individuell zugeordnet.

Die verschiedenen Dringlichkeitsgrade verschiedener Arten von Verarbeitungsanforderungen können aber auch ursächlich durch verschiedene Teilnehmerberechtigungen bedingt sein. Teilnehmerstellen können gegenüber einer normalen Verkehrsberechtigung im Ausnahmefall auch eine Sonderberechtigung haben, die ihnen bei der Verbindungsherstellung einen Vorrang gegenüber den Teilnehmerstellen mit Normalberechtigung verleihen. Demgegenüber kann es auch noch kathastrophenberechtigte Teilnehmerstellen geben, die wiederum gegenüber allen anderen Teilnehmerstellen bei der Verbindungsherstellung mit Vorrang bedient werden. In diesem Zusammenhang ergeben sich also die unterschiedlichen Dringlichkeitsgrade verschiedener Arten von Verarbeitungsanforderungen aus den verschiedenen Teilnehmerberechtigungen, die für die betreffenden Teilnehmer gespreichert sind.

Eine Anforderungsabweiseinrichtung arbeitet nun in der Weise, daß sie bei einer jeden Verarbeitungsanforderung einen Vergleich ihres Dringlichkeitswertes mit dem kritischen Grenzwert vornimmt. In der Zeichnung ist eine Anforderungsabweiserichtung K angedeutet. Verarbeitungsanforderungen werden ihr über den Weg k zugeführt. Für eine jede Verarbeitungsanforderung gibt die Anforderungsabweiseinrichtung K über den Weg L ein Annahme kennzeichen oder ein Abweisungskennzeichen an das Schaltwerk P ab, wodurch dieses jeweils veranlaßt wird, die betreffende Verarbeitungsanforderung anzunehmen oder abzuweisen, das heißt, die betreffende, zu verarbeitende Information aufzunehmen und in an sich bekannter Weise zu verarbeiten oder ein entsprechendes gegenteiliges Signal über den Weg t an die betreffende verbindungsindividuelle Schalteinrichtung T zu übertragen, wodurch hier signalisiert wird, daß der betreffende Verbindungsaufbau nicht fortgeführt werden kann. Dem rufenden Teilnehmer wird in an sich bekannter Weise ein entsprechendes Besetztsignal ausgesendet.

In der Zeichnung ist unter anderem eine Verkehrsmeßeinrichtung At angedeutet, mit deren Hilfe ein kritischer Grenzwert laufend ermittelt wird, der in einem Speicher b1 bis b8 der Anforderungsabweiseinrichtung aufgenommen wird. Diese Speicherung möge darin bestehen, daß eine der Speicherzeilen b1 bis b8 eine entsprechende Markierung erhält. Demgemäß möge jeweils einer von acht verschiedenen möglichen kritischen Grenzwerten speicherbar sein.

Der einer Verarbeitungsanforderung entsprechende jeweilige Dringlichkeitswert wird einem Dringlichkeitswert Zwischenspeicher D zugeführt, der ebenfalls acht Speicherzeilen d1 bis d8 enthält. Der jeweilige Dringlichkeitswert möge ebenfalls dadurch speicherbar sein, daß eine der Speicherzeilen des Dringlichkeitswert-Zwischenspeichers D entsprechend markiert wird.

Die Anforderungsabweiseinrichtung umfaßt ferner einen Vergleicher K, der nach Eintreffen einer jeden Verarbeitungsanforderung den ihr zugeordneten und im Dringlichkeitswert-Zwischenspeicher D zwischengespeicherten Dringlich keitswert mit dem gespeicherten kritischen Genzwert vergleicht. Wenn der Dringlichkeitswert größer als der kritische Grenzwert ist, gibt der Vergleicher K ein Annahmekennzeichen zum Schaltwerk P hin ab. Ist der Dringlichkeitswert kleiner als der kritische Grenzwert, so gibt der Vergleicher K ein Abweisungskennzeichen an das Schaltwerk P ab. Der Vergleicher K teilt also einer jeden Verarbeitungsanforderung eines der beiden Kennzeichen zu, wodurch eine jede der Verarbeitungsanforderungen für eingetroffene Informationen gemäß dem betreffenden zugeteilten Kennzeichen dem Schaltwerk P zur Verarbeitung zugeführt wird oder nicht zugeführt wird. Dadurch ist die Möglichkeit gegeben, daß überdurchschnittlich dringliche Verarbeitungsanforderungen mit einem gewissen Vorrang gegenüber unterdurchschnittlich dringlichen Verarbeitungsanforderungen hinsichtlich ihrer Verarbeitung in dem Schaltwerk P berücksichtigt werden.

Wie ausgeführt wurde, werden Verarbeitungsanforderungen mit unterschiedlichen Dringlichkeitswerten abgegeben. Dadurch werden die Verarbeitungsanforderungen nach Maßgabe des jeweiligen Dringlichkeitsgrades gegenseitig priorisiert. Dies bedeutet, daß in einer Phase der Drosselung der Verkehrsbelastung, wenn also ein Teil der eingehenden Verarbeitungsanforderungen abgewiesen wird, Verarbeitungsanforderungen mit einem niedrigen Dringlichkeitsgrad zu einem sehr hohen Anteil abgewiesen werden. Aber auch unter dieser Voraussetzung besteht das Erfordernis, daß Teilnehmer mit normaler Berechtigung, von denen also die Verarbeitungsanforderungen immer nur mit einem sehr niedrigen Dringlichkeitsgrad, zum Beispiel mit dem untersten Dringlichkeitsgrad eintreffen, trotzdem eine Chance haben, eine Verbindung herzustellen. Dieses Erfordernis ist durch die Notrufmöglichkeit bedingt, die jederzeit gegeben sein muß. Einerseits soll also der beschriebene Vorrang in Phasen von Abweisungen von Verarbeitungsanforderungen gewährleistet sein. Andererseits sollen aber Verarbeitungsanforderungen, denen ein niedriger, zum Beispiel der niedrigste Dringlichkeitswert zugeordnet ist, nicht gänzlich abgewiesen werden können. Dabei ist es von Vorteil, die Erfolgs-Chance für Teilnehmer ohne besondere Berechtigungen so weit wie möglich vom Teilnehmerverhalten unabhängig zu machen. Dies wird mit Hilfe der hier beschriebenen Schaltungsanordnung erreicht.

Um die zuvor aufgeführten vermittlungstechnischen Vorgänge zu realisieren, ist in erfindungsgemäßer Weise vorgesehen, daß in größerer Anzahl vorgesehene verbindungsindividuelle Schalteinrichtungen, von denen die Verarbeitungsanforderungen mit gleichem Dringlichkeitsgrad abgegeben werden, und denen mittels ihrer Adressen gleiche Dringlichkeitswerte zugeordnet sind, bei Abgabe jeweils einer Verarbeitungsanforderung zusätzlich durch einen ebenfalls aus der Adresse abgeleiteten Ordnungswert ergänzend markiert sind. Jede der verbindungsindividuellen Schalteinrichtungen ist mit Hilfe einer Adresse ansteuerbar. Bei Abgabe einer Verarbeitungsanforderung liegt im Schaltwerk P die betreffende Adresse vor. Diese Adresse wird unter anderem einem Adressenauswerter A zugeführt. Dieser leitet aus der jeweiligen Adresse den jeweiligen Dringlichkeitswert ab. Der Dringlichkeitswert kann außer durch die Adresse selber auch zusätzlich jeweils durch die Art der zu verarbeitenden Information bestimmt sein.

Es kann nun davon ausgegangen werden, daß eine große Anzahl von Verarbeitungsanforderungen den gleichen Dring lichkeitswert aufweist. Bei Abgabe jeweils einer Verarbeitungsanforderung leitet der Adressenauswerter A aus der jeweiligen Adresse der verbindungsindividuellen Schalteinrichtung zusätzlich einen Ordnungswert ab. Dieser möge aus den beiden letzten Bit einer wesentlich umfangreicheren Adresseninformation bestehen.

Die Verarbeitungsanforderungen mit gleichem Dringlichkeitswert sind also zusätzlich durch diesen Ordnungswert ergänzend markiert, der mit Hilfe des Adressenauswerters A gewonnen wird. Diese Ordnungswerte sind teilweise voneinander verschieden. Sie sind auf die verschiedenen Verarbeitungsanforderungen gleichmäßig verteilt, wobei jeweils ein und derselbe Ordnungswert laufend wiederkehrt, was für jeden der verschiedenen Ordnungswerte zutrifft. Die den Verarbeitungsanforderungen zugeordneten Dringlichkeitswerte sind also durch die sie ergänzenden Ordnungswerte variiert. Dadurch sind Verbindungsanforderungen mit ursprünglich gleicher Dringlichkeit in Dringlichkeitsgruppen mit pro Dringlichkeitswert unterschiedlichen Dringlichkeitsklassifizierungen verschiedenen Wertes aufgeteilt.

Im Dringlichkeitswert-Zwischenspeicher D wird - wie bereits beschrieben - für jede eintreffende Verarbeitungsanforderung vorübergehend der ihr zugeordnete Dringlichkeitswert gespeichert. Sofern die Dringlichkeitswerte von Verarbeitungsanforderungen durch die sie ergänzenden Ordnungswerte variiert sind, wird jeweils anstelle des Dringlichkeitswertes die durch Hinzunahme des Ordnungswertes sich ergebende Dringlichkeitsklassifizierung im Dringlichkeitswert-Zwischenspeicher D gespeichert.

Es ist nun noch zu beschreiben, wie die verschiedenen Dringlichkeitsklassifizierungen pro Dringlichkeitswert gewonnen werden. Wie bereits angegeben, wird mit Hilfe des Adressenauswerters A für bestimmte Verarbeitungsanforderungen ein den jeweiligen Dringlichkeitswert ergänzender Ordnungswert ermittelt. Dieser wird einer Verknüpfungsschaltung V zugeführt. Ferner ist ein Uhrzeitgeber U vorgesehen, in welchem in binärcodierter Form die momentane Uhrzeit gespeichert ist. Hierzu mögen Speicherzellen un bis u1 dienen. Jede dieser Speicherzellen möge zur Speicherung von je einem Bit der Uhrzeitinformation dienen. Es sei angenommen, daß die Speicherzellen u1 und u2 für die beiden letzten Stellenwerte der jeweiligen Uhrzeitinformation vorgesehen sind. Demnach wechselt die Information in der Speicherzelle u1 am häufigsten und in der Speicherzelle u2 am zweithäufigsten.

Die Verknüpfungsschaltung V verknüpft nun den Ordnungswert einer Verarbeitungsanforderung mit den in den beiden Speicherzellen u1 und u2 gespeicherten Teilen der Uhrzeitinformation. Diese Verknüpfung kann zum Beispiel in Form einer einfachen Undierung stattfinden. Durch die Verknüpfung mit der Uhrzeitinformation wird eine Zuordnung der mehreren Dringlichkeitsklassifizierungen pro Dringlichkeitswert zu den Ordnungswerten erzielt, die zeitabhängig zyklisch wechselt. Die Zuordnung der mehreren Dringlichkeitsklassifizierungen pro Dringlichkeitswert zu den Ordnungswerten wird also in gleichmäßigen Zeitabständen zyklisch vertauscht. Dadurch haben die verschiedenen Teilnehmer, von denen die Verarbeitungsanforderungen zunächst mit gleichem Dringlichkeitswert eingehen, Dringlichkeitsklassifizierungen, die in gleichmäßigen Zeitabständen zyklisch wechseln. Dadurch wird erreicht, daß die Erfolgschance für Teilnehmer ohne besondere Berechtigung gleichmäßiger verteilt ist. Reihum haben diese Teilnehmer zu bestimmten Zeiten eine Er- folgschance und zu anderen Zeiten nicht; zeitlich gesehen im Mittel aber haben diese Teilnehmer alle die gleiche Er folgschance. Bei grundsätzlich gleicher Berechtigung sind immer kurzzeitig einige dieser Teilnehmer gegenüber den übrigen bevorrechtigt. Diese Bevorrechtigung wechselt zyklisch unter diesen Teilnehmern. Dadurch haben in Phasen stärkerer Verkehrsbelastung und intensiverer Abweismaßnahmen diese Teilnehmer immer einmal vorübergehend eine Erfolgschance zur Verbindungsherstellung, insbesondere für Notrufe.

Die Abweiseinrichtungen verwenden also bei dem Vergleich mit ihrem kritischen Grenzwert die Dringlichkeitsklassifizierung, sofern eine solche zusätzlich zum gegebenen Dringlichkeitswert gewonnen wird. Die Dringlichkeitsklassifizierung wird in der beschriebenen Weise für Verarbeitungsanforderungen zusätzlich gewonnen, die einen relativ niedrigen Dringlichkeitsgrad haben, insbesondere denen der niedrigste Dringlichkeitwert zugeordnet ist.

Wie ausgeführt wurde, vergleicht der Vergleicher K den jeweiligen Dringlichkeitswert bzw. die jeweilige Dringlichkeitsklassifizierung mit dem kritischen Grenzwert. Es kann vorgesehen werden, daß die verschiedenen Dringlichkeitswerte und die verschiedenen Dringlichkeitsklassifizierungen immer ungleich sind mit dem jeweils eingeregelten kritischen Grenzwert. Dies kann dadurch bewerkstelligt werden, daß die kritischen Grenzwerte immer nur ungerade Zahlen sein können, während Dringlichkeitswerte und Dringlichkeitsklassifizierungen immer nur gerade Werte sein können. Für den Fall, daß der jeweilige Dringlichkeitswert bzw. die jeweilige Dringlichkeitsklassifizierung auch dem jeweils eingeregelten kritischen Grenzwert gleich sein kann, ist vorgesehen, daß bei Gleichheit ebenfalls ein Annahmekennzeichen der betreffenden Verarbeitungsanforderung zugeteilt wird. Im Gegensatz hierzu kann auch vorgesehen werden, daß in diesem Fall ein Abweisungskenn zeichen der betreffenden Verarbeitungsanforderung zugeteilt wird.

Bezugszeichenliste

     T verbindungsindividuelle Schalteinrichtung
     P informationsverarbeitendes Schaltwerk
     K Anforderungsabweiseinrichtung
     k Informationsweg für Verarbeitungsanforderungen
     t Informationsweg für Annahme- oder Abweisungssignal
     At Verkehrsmeßeinrichtung
     B, b1–b8 Speicher für kritischen Grenzwert
     D, d1–d8 Dringlichkeitswert-Zwischenspeicher
     A Adressenauswerter
     V Verknüpfungsschaltung
     U Uhrzeitgeber
     ul–un Speicherzellen des Uhrzeitgebers

**Patentansprüche**

1. Schaltungsanordnung für Fernmeldevermittlungsanlagen, insbesondere Fernsprechvermittlungsanlagen, mit zentralen und/oder teilzentralen informationsverarbeitenden Schaltwerken (P) mit einer hinsichtlich der Informations-Verarbeitungskapazität begrenzten Leistungsfähigkeit, und mit Verkehrsmeßeinrichtungen (At) zur Ermittlung der Informationsverarbeitungs-Verkehrsbelastung jeweils eines Schaltwerkes und zur Erkennung von durch Verarbeitungsanforderungen verursachten Informationsverarbeitungs-Verkehrsüberlastungen und mit einer Abwehr solcher Überlastungen dienenden Anforderungsabweiseinrichtungen, in denen nach Maßgabe der jeweils ermittelten Informationsverarbeitungs-Verkehrsbelastung ein kritischer Grenzwert einregelbar ist (B), und in denen unterschiedlichen Dringlichkeitsgraden verschiedener Arten von Verarbeitungsanforderungen entsprechend diesen analog unterschiedliche Dringlichkeitswerte individuell zugeordnet sind (D), und die durch jeweils einen Vergleich des Dringlichkeitswertes einer jeden Verarbeitungsanforderung mit dem kritischen Grenzwert jener jeweils ein Annahmekennzeichen - bzw. Abweisungskennzeichen - zuteilt, wenn der Dringlichkeitswert größer - bzw. kleiner - als der kritische Grenzwert ist, und durch die eine jede der Verarbeitungsanforderungen für eingetroffene Informationen gemäß dem betreffenden zugeteilten Kennzeichen dem Schaltwerk zur Verarbeitung zugeführt wird - bzw. nicht zugeführt wird - , wodurch überdurchschnittlich dringliche Verarbeitungsanforderungen mit einem gewissen Vorrang gegenüber unterdurchschnittlich dringlichen Verarbeitungsanforderungen hinsichtlich ihrer Verarbeitung in dem Schaltwerk berücksichtigt werden, **dadurch gekennzeichnet,** daß die Schaltungsanordnung Mittel aufweist, die bewirken, daß in größerer Anzahl vorgesehene Schalteinrichtungen (T), von denen die Verarbeitungsanforderungen mit gleichem Dringlichkeitsgrad abgegeben werden, und denen mittels ihrer Adresse gleiche Dringlichkeitswerte zugeordnet sind, bei Abgabe jeweils einer Verarbeitungsanforderung zusätzlich durch einen ebenfalls aus der Adresse abgeleiteten Ordnungswert ergänzend markiert sind, daß die den Verarbeitungsanforderungen zugeordneten Dringlichkeitswerte durch die sie ergänzenden Ordnungswerte variiert sind, wodurch Verbindungsanforderungen mit ursprünglich gleicher Dringlichkeit in Dringlichkeitsgruppen mit pro Dringlichkeitswert unterschiedlichen Dringlichkeitsklassifizierungen verschiedenen Wertes aufgeteilt sind, daß die Abweiseinrichtungen bei dem Vergleich mit ihrem kritischen Grenzwert die jeweilige Dringlichkeitsklassifizierung verwenden, und daß die Zuordnung der mehreren Dringlichkeitsklassifizierungen pro Dringlichkeitswert zu den Ordnungswerten in gleichmäßigen Zeitabständen zyklisch vertauscht wird.

2. Schaltungsanordnung nach Anspruch 1, **dadurch gekennzeichnet**, daß eine Anforderungsabweiseinrichtung (K) einer Verarbeitungsanforderung ein Annahmekennzeichen - bzw. Abweisungskennzeichen - zuteilt, wenn der betreffende Dringlichkeitswert gleich oder größer - bzw. kleiner - als der kritische Grenzwert ist.

3. Schaltungsanordnung nach Anspruch 1, **dadurch gekennzeichnet**, daß eine Anforderungsabweiseinrichtung (K) einer Verarbeitungsanforderung ein Annahmekennzeichen - bzw. Abweisungskennzeichen - zuteilt, wenn der betreffende Dringlichkeitswert größer - bzw. gleich oder kleiner - als der kritische Grenzwert ist.

4. Schaltungsanordnung nach Anspruch 1, **dadurch gekennzeichnet,** daß eine Anforderungsabweiseinrichtung (K) den Ordnungswert durch Entnahme eines solchen Teiles aus der jeweiligen Adresse bildet, die bei Verarbeitungsanforderungen gleichen Dringlichkeitswertes abgebenden verbindungsindividuellen Schalteinrichtungen voneinander verschieden sind.

5. Schaltungsanordung nach Anspruch 4, **dadurch gekennzeichnet,** daß eine Anforderungsabweiseinrichtung (K) die Dringlichkeitswerte den Ordnungswerten dadurch zuordnet, daß sie die Ordnungswerte sowie Uhrzeitwerte, insbesondere Teile von diesen, einer Verknüpfungseinrichtung zuführt, die beide miteinander verknüpft und jeweils eine entsprechende Dringlichkeitsklassifizierung an die Anforderungsabweiseinrichtung abgibt.

**Claims**

1. Circuit arrangement for telecommunication exchanges, in particular for telephone exchanges equipped with common and/or intermediate-level control processors (P) having a capacity which is limited with respect to the information processing capacity, and with traffic-measuring devices (At) for determining the information-processing traffic loading of in each case one processor and for detecting information processing traffic overloads caused by processing requests and with request rejection devices used for controlling such overloads, in which devices a critical limit value (B) can be adjusted as determined by the information processing traffic loading determined in each case, and in which, corresponding to different degrees of urgency of various types of processing requests, analogously different urgency values are individually allocated to these (D), and which, by in each case a comparison of the urgency value of each processing request with the critical limit value, allocates to the latter in each case an acceptance code – or rejection code, respectively – if the urgency value is greater – or less, respectively – than the critical limit value, and by means of which each of the processing requests for received information items is supplied – or not supplied, respectively – to the processor for processing in accordance with the relevant code allocated, as a result of which above-average urgent processing requests are taken into consideration with a certain priority compared with below-average urgent processing requests with respect to their processing in the processor, characterized in that the circuit arrangement exhibits means which have the effect that switching devices provided in relatively great number (T), by which the processing requests are delivered with the same degree of urgency and which are allocated the same urgency values by means of their address, are additionally marked in a supplementary manner by an order value, which is also derived from the address, when a processing request is in each case delivered, in that the urgency values allocated to the processing requests are varied by the order values supplementing them, as a result of which connection requests having originally equal urgency are divided into urgency groups with urgency classifications of various values which differ per urgency value, in that the rejection devices use the respective urgency classification during the comparison with their critical limit value, and in that the allocation of the several urgency classifications per urgency value to the order values is cyclically exchanged at uniform time intervals.

2. Circuit arrangement according to Claim 1, characterized in that a request rejection device (K) allocates an acceptance code – or rejection code, respectively – to a processing request whenever the relevant urgency value is equal to or greater than – or less than, respectively – the critical limit value.

3. Circuit arrangement according to Claim 1, characterized in that a request rejection device (K) allocates an acceptance code – or rejection code, respectively – to a processing request whenever the relevant urgency value is greater than – or equal to or less than, respectively – the critical limit value.

4. Circuit arrangement according to Claim 1, characterized in that a request rejection device (K) forms the order value by extracting such a part from the respective address, which differ from one another in connection-individual switching devices delivering processing requests of the same urgency value.

5. Circuit arrangement according to Claim 4, characterized in that a request rejection device (K) allocates the urgency values to the order values in that it supplies the order values and clock time values, particularly parts of these, to a logical combining device which logically combines the two with one another and in each case delivers a corresponding urgency classification to the request rejection device.

## Revendications

1. Montage pour centraux de télécommunications, notamment pour centraux téléphoniques, comportant des unités centrales et/ou partiellement centrales de commutation (P), qui traitent les informations et qui possèdent une capacité potentielle limitée de traitement des informations, et des dispositifs (At) de mesure du trafic servant à déterminer la charge en trafic de traitement d'informations d'une unité respective de commutation et à identifier des surcharges de trafic de traitement d'informations provoquées par des demandes de traitement, et des dispositifs de rejet des demandes qui sont utilisés pour lutter contre de telles surcharges, et dans lesquels une valeur limite critique peut être réglée (B) en fonction de la charge respectivement déterminée en trafic de traitement d'informations, et dans lesquels, en fonction de différents degrés de priorité de différents types de demandes de traitement, des valeurs de priorité qui sont différentes d'une manière analogue auxdits degrés de priorité, sont associées individuellement (D) auxdites demandes, et qui affectent respectivement un indicatif d'acceptation – ou un indicatif de rejet – au moyen respectivement d'une comparaison de la valeur de priorité de chaque demande de traitement à la valeur limite critique, lorsque la valeur de priorité est supérieure – ou inférieure – à la valeur limite critique, et à l'aide desquels chacune des demandes de traitement pour des informations arrivantes est envoyée – ou n'est pas envoyée – en fonction de l'indicatif affecté considéré, à l'unité de commutation en vue de son traitement, ce qui a pour effet que des demandes de traitement d'une urgence supérieure à la moyenne sont prises en compte avec une certaine priorité par rapport à des demandes de traitement possédant une priorité inférieure à la moyenne, pour leur traitement dans l'unité de commutation, caractérisé par le fait que le montage comporte des moyens agissant en sorte que des dispositifs de commutation (T), qui sont prévus en un nombre assez élevé et qui délivrent des demandes de traitement possédant le même degré de priorité et auxquelles des valeurs identiques de priorité sont associées au moyen de leur adresse, sont en outre marqués de façon complémentaire par une valeur d'ordre dérivée également de l'adresse, lors de la délivrance d'une demande respective de traitement, que les valeurs de priorité associées aux demandes de traitement sont modifiées par les valeurs d'ordre qui complètent les valeurs de priorité, ce qui a pour effet que des demandes d'établissement de liaisons qui possèdent initialement une même priorité, sont réparties dans des groupes de priorités comportant des classements de priorités qui possèdent des valeurs différentes et sont différents pour chaque valeur de priorité, que lors de la comparaison à leur valeur limite critique, les dispositifs de rejet utilisent le classement respectif de priorité et que l'association des différents classements de priorités, pour chaque valeur de priorité, aux valeurs d'ordre est permuté cycliquement dans des intervalles de temps uniformes.

2. Montage suivant la revendication 1, caractérisé par le fait qu'un dispositif (K) de rejet des demandes affecte à une demande de traitement un indicatif d'acceptation – ou un indicatif de rejet –, lorsque la valeur considérée de priorité est égale ou supérieure – ou inférieure – à la valeur limite critique.

3. Montage suivant la revendication 1, caractérisé par le fait qu'un dispositif (K) de rejet des demandes affecte à une demande de traitement un indicatif d'acceptation – ou un indicatif de rejet –, lorsque la valeur considérée de priorité est supérieure – ou égale ou inférieure – à la valeur limite critique.

4. Montage suivant la revendication 1, caractérisé par le fait qu'un dispositif (K) de rejet des demandes forme la valeur d'ordre par prélèvement, dans les adresses respectives, de parties qui sont différentes les unes des autres dans le cas de dispositifs de commutation prévus individuellement pour les liaisons et délivrant des demandes de traitement possédant la même valeur de priorité.

5. Montage suivant la revendication 4, caractérisé par le fait qu'un dispositif (K) de rejet des demande associe les valeurs de priorité aux valeurs d'ordre par le fait qu'il envoie les valeurs d'ordre ainsi que les valeurs de temps, et notamment des parties de ces valeurs, à un dispositif combinatoire qui combine ces valeurs entre elles et envoie respectivement un classement correspondant de priorités au dispositif de rejet des demandes.